# EUROPÄISCHE PATENTSCHRIFT

(11) **EP 2 481 544 B1**
(45) Veröffentlichungstag und Bekanntmachung des Hinweises auf die Patenterteilung: **06.12.2017**
(21) Anmeldenummer: 12152130.6
(22) Anmeldetag: 23.01.2012
(51) Int. Cl.: B29B 9/14, B29B 9/02, B29C 70/08, B29C 63/06

(54) **Verfahren zur Herstellung von umhüllten, faserhaltigen Schüttkörpern**
Method for manufacturing coated bulk materials containing fibres
Procédé de fabrication de corps enveloppés et contenant des fibres

(30) Priorität: 26.01.2011 DE 102011009521
(43) Veröffentlichungstag der Anmeldung: 01.08.2012
(73) Patentinhaber: Thüringisches Institut Für Textil- Und Kunststoff- Forschung E.V., 07407 Rudolstadt (DE)
(72) Erfinder: Reußmann, Thomas, 07407 Rudolstadt (DE); Lützkendorf, Renate, 07426 Königsee (DE); Ortlepp, Gerald, 07407 Uhlstädt (DE)
(74) Vertreter: Fritz, Edmund Lothar

(56) Entgegenhaltungen:
- DE-A1- 19 711 247
- DE-A1-102004 026 493
- DE-A1-102005 041 769

## Beschreibung

Die vorliegende Erfindung betrifft ein Verfahren zur Herstellung von weichen, zylinderähnlichen, mit einem flexiblen Material umhüllten, faserhaltigen Schüttkörpern, bei dem man Fasern, Faserbündel, Faserstaub oder eine Mischung aus mindestens zwei dieser Komponenten zu einem endlosen Strang formt, diesen kontinuierlich mit einem parallel dazu geführten, endlos zulaufenden flexiblen Hüllmaterialstreifen, welcher breiter ist als der Umfang des späteren Schüttkörpers, durch Längsumschlagen den losen Faserstrang vollständig umhüllt und durch Haften eines gebildeten Überlappungsbereiches dauerhaft umschließt, welcher als endloser Hüllstrang in einem abschließenden Arbeitsschritt durch Querschneiden in Schüttkörper überführt wird.

Polymere Faserverbundwerkstoffe werden entsprechend der Verstärkungsfaser in kurz- und langfaserverstärkte Verbundwerkstoffe sowie in endlosfaserverstärkte, meist mit gezielter Faserorientierung ausgestattete Materialien, unterteilt.

Bezüglich der Polymermatrix unterscheidet man bei faserverstärkten Verbundwerkstoffen thermoplastische, duromere und elastomere Systeme.

Heute werden polymergebundene hochleistungsfaserverstärkte Verbundwerkstoffe für den Leichtbau vorrangig auf Basis duromerer Matrixsysteme mit gerichteten Endlosfasern auf Basis von Glas, Aramid und Carbon industriell eingesetzt. Dies erfordert einerseits die Endlosform der primären Verstärkungsfasern als Ausgangsmaterial; andererseits sind auf dem Weg zum fertigen Bauteil kostenintensive Halbzeugformen wie Gewebe, Gelege oder Geflechte bei zeitaufwändigen Bauteilherstellungsverfahren nach dem Harz-Injektionsverfahren (Liquid Composite Moulding, LCM) wie Resin Transfer Molding (RTM) und Resin Injection Molding (RIM), oder Herstellungprozesse nach dem Wickelverfahren, Vakuumsackverfahren oder gar das Handlaminieren notwendig.

Neben dieser teuren Bauteilherstellung fallen zusätzlich erhebliche Abfallmengen an, die von der Industrie mit bis zu 30% spezifiziert werden. Diese Abfälle sind echte Abfälle, die gegenwärtig thermisch verwertet oder nur für einen minderwertigeren Einsatz aufgemahlen werden. Eine hochwertige Wiederverwertung dieser Abfälle bzw. der Einsatz abfallarmer Verbundherstellungstechnologien wären ein Schlüssel zur Senkung der Rohstoffkosten und zur Verbesserung der Serientauglichkeit.

Beide Optimierungshebel - Aufarbeitung von Abfällen und deren Wiedereinsatz als verstärkungsfaserhaltige Halbzeuge für abfallarme Verbundherstellungsverfahren mit dem Schwerpunkt der Faserverstärkung thermoplastischer Matrices - sind die Zielrichtung der vorliegenden Erfindung.

Die prozesstechnischen Vorteile der thermoplastischen Materialien, insbesondere die nur halb so langen Zykluszeiten, werden für viele Anwendungen den Übergang vom Duroplast zum Thermoplast zur Folge haben. Hinzu kommt das Recycling- und Wiederverwertungsproblem. Duroplastische Verbundmaterialien können nicht wiederverwertet werden - es sei denn als geschredderter Füllstoff. Diese Verwertung ist vom Umfang her begrenzt und für Hochleistungsfaserverbundwerkstoffe wirtschaftlich nicht vertretbar und stellt damit keinen serientauglichen Lösungsansatz dar.

Zur Herstellung von Formteilen aus Thermoplasten ist das Spritzgießverfahren das bedeutendste Verfahren. Vielfältige und weitgehend automatisierte Arbeitstechniken erlauben es, nahezu alle Formen und Größen von Formteilen herzustellen, die zur Qualitätsverbesserung mit Verstärkungsfasern armiert sind. Das Spritzgießen mit seiner hohen Serientauglichkeit und den vielseitigen Anwendungsmöglichkeiten stellt ein Verfahren dar, das vor allem im Bereich der Thermoplastverarbeitung in der Industrie eine breite Akzeptanz besitzt.

Das Spritzgießen ist durch extrem kurze Zykluszeiten der Bauteilherstellung charakterisiert. Damit sind die besten Voraussetzungen für Großserienanwendungen gegeben. Die dabei anfallenden Abfallmengen sind gering und aufgrund der Wiederaufschmelzbarkeit gut wiederverwertbar.

Durch den Spritzguss lässt sich die Gestaltungsfreiheit für die Bauteile erweitern und der zusätzliche konstruktive Spielraum durch die Nutzung der Weiterverarbeitungsverfahren Schweißen und Umformen im Umgang mit Hochleistungsfaserverbundwerkstoffen vorteilhaft ausnutzen. Dieses Verfahren bietet rationelle Möglichkeiten, Verbindungs- und Krafteinleitungselemente aber auch Versteifungen und zusätzliche Funktionselemente in einem Arbeitsgang bei hoher geometrischer Gestaltungsfreiheit zu applizieren.

Für die Herstellung von verspritzbaren Compounds ist der Einsatz kommerzieller Extrusionstechnik notwendig. Die erforderlichen Ausgangsmaterialien hierfür müssen in einer rieselfähigen und leicht dosierbaren Form bereitstehen. Handelsübliche Verstärkungsfaserstoffe in Form von Endlosfasern, Stapelfasern und Kurzfasern verfügen über eine Reihe von Nachteilen in Bezug auf die notwendige Rieselfähigkeit, Dosierbarkeit und damit einer konstant und definiert einstellbaren Zufuhr.

So sind Kurzfasern aus z.B. Recyclingprozessen als auch textile Langfasern mit Faserlängen im Bereich von 25 - 60 mm für die Herstellung verspritzbarer Compounds nicht verwendbar. Bei Kurz- und Langfaserfaserschüttungen verhaken die einzelnen Fasern untereinander in einer Wirrlage, bilden Faserbrücken und Materialklumpen, die die Öffnung der Einfülltrichter an den Extrudern verstopfen und nur einen unkontrollierbar sporadischen Einzug in die Maschine zulassen. Neben den sich daraus ergebenden Unterbrechungen eines kontinuierlichen Materialstroms für die Maschinenbeschickung kann es zu erheblichen Abweichungen des angestrebten Mischungsverhältnisses von Verstärkungsfaser und Kunststoffmatrix im Endprodukt kommen, was dazu führt, dass mechanische Bauteileigenschaften nicht sichergestellt werden können.

Als gut dosierbare Produktform gibt es sogenannte Faserpellets. Im Fall der interessierenden Hochleistungsfasern werden auf dem Markt gepresste CF-Mahlfraktionen mit extrem kurzen Faserlängen << 1 mm in Pelletform angeboten ["SIGRAFIL® C - die Carbonfaser für industrielle Anwendungen"; www.sglgroup.com/cms/international/products/product-groups/ cf/carbon-fibers-for-intake-fittings/index.html?_locale=de]. Diese CF-Mahlfraktionen sind aufgrund ihrer geringen Faserlängen weniger zur mechanischen Bauteilverstärkung geeignet und werden deshalb hauptsächlich wegen der elektrischen Leitfähigkeit der CF-Partikel zur Ausbildung definierter elektrischer Eigenschaften spritzgegossener Verbunde eingesetzt.

Ein von der Anmelderin vor einigen Jahren entwickeltes Verfahren gestattete es erstmals, auch textile Stapelfasern im Längenbereich von 25 bis 60 mm zu Langfasergranulaten und Faserkonzentraten bis maximal 80% Verstärkungsfaseranteil zu verarbeiten, die über den Prozess der Compoundierung zu spritzgießfähigen faserverstärkten Granulaten führen. [DE 197 11 247 A1] Hier ist es jedoch erforderlich, thermoplastische Anteile während der Granulatherstellung energieintensiv aufzuschmelzen.

In der DE 10 2004 026 493 A1 wird der Oberbegriff des Anspruchs 1 offenbart. Es wird ein gattungsgemäßes Verfahren zur Herstellung faserhaltiger Kunststoffgranulate mit Faseranteilen > 90% mit den eingangs genannten Merkmalen vorgestellt, in dem eine wärmeschrumpffähige Folie um einen Faserstrang angeordnet, der folienummantelte Strang wärmebehandelt und abgekühlt werden muss, bevor er am Schluss granuliert werden kann. Der Nachteil dieses Verfahrens ist, dass man zwingend eine schrumpffähige Ummantelungsfolie benötigt, was den Einsatz des Hüllmaterials stark einschränkt. Weiterhin ist das Verfahren in der Art aufwendig und energieintensiv, da zur Auslösung des Schrumpfes der Folie nach Anspruch 7 bis auf 180°C erhitzt und anschließend wieder abgekühlt werden muss. Im Anspruch 11 dieses Patentes wird ebenfalls die Granulatgeometrie derart eingeschränkt, dass der Granulatdurchmesser auf 1 bis 5 mm und die Granulatlänge auf maximal 15 mm begrenzt werden.
Ausgehend von dem zuvor genannten Stand der Technik besteht die Aufgabe der vorliegenden Erfindung darin, ein Verfahren zur Herstellung faserhaltiger Kunststoffgranulate der eingangs genannten Art zu schaffen, welches einen geringeren Energiebedarf hat und bei dem keine schrumpfenden Folien benötigt werden.
Diese Aufgabe wird erfindungsgemäß dadurch gelöst, dass man einen selbstklebenden Hüllmaterialstreifen verwendet und man den Zusammenhalt des endlos umhüllten Faserstrangs durch Selbsthaften des Hüllmaterialstreifens im Überlappungsbereich herbeiführt.

Dies bedeutet, dass der gesamte Herstellungsprozess bis zum rieselfähigen Schüttkörper quasi im kalten Zustand bei Raumtemperatur erfolgt und der umhüllte Faserstrang vor dem Granulieren bzw. definierten Ablängen weder energieintensiv aufgeheizt noch gekühlt werden muss. Damit ist es möglich, alle nichtschrumpfenden Hüllmaterialien von Papier über Folien aller Art bis hin zu dünnen Spinnvliesen oder netzartigen bzw. perforierten Hüllmaterialien einzusetzen. Da es insbesondere für den Einsatz derartiger Granulate für faserverstärkte Kunststoffe wichtig ist, dass keine störenden Fremdkomponenten in das System Verstärkungsfaser-Matrix eingebracht werden, die den angestrebten Verstärkungseffekt beeinträchtigen oder weiterverarbeitende Technologieschritte behindern oder verteuern, werden in der Regel Polymere eingesetzt, die chemisch identisch mit der späteren Kunststoffmatrix sind. Die erfindungsgemäße Lösung gestattet es, dem ideal Rechnung zu tragen, indem man beispielsweise für ein späteres faserverstärktes Polyamid 6 (PA6) ein dementsprechendes Hüllmaterial aus Polyamid 6 (PA6) verwendet. Analoges gilt für Polyamid 6.6 (PA6.6), Polyether-Etherketon (PEEK), Polyoxymethylen (POM), Polyetherimid (PEI), Polyphenylensulfid (PPS) - oft eingesetzte Matrices für Massenkunststoffe und hochleistungsfaserverstärkte Hightech-Anwendungen. Bei diesen Polymeren gibt es keine thermisch schrumpfenden Folievarianten, so dass die in DE 10 2004 026 493 A1 vorgeschlagene Verfahrenslösung nur auf die dort genannten Polymere: Polythylen, Poyvinylchlorid, Polyethylen-Terephthalat, Polypropylen und Copolymere als schrumpffähige Folien für die Umhüllung beschränkt ist. Die erfindungsgemäße Verfahrenslösung gestattet es neben allen anderen Polymervarianten als Hüllmaterial auch diese Polymere, in ihrer schrumpfarmen Variante problemlos einzusetzen.

Ein weiterer Vorteil gegenüber dem Stand der Technik ist, dass mit der vorliegenden Erfindung dosierbare faserhaltige Schüttkörper resultieren, die einen Verstärkungsfasergehalt >90% aufweisen.

Im Gegensatz zum Stand der Technik, in dem ein Verschweißen erfolgt, handelt es sich bei dem erfindungsgemäßen Verfahren um ein Verkleben, was ein technisch ganz anderer Prozess ist. Der Schweißprozess wird durch einen Klebeprozess ersetzt, wobei die selbstklebende Folie zusätzlich die Aufgabe der pressenden Schrumpffolie übernimmt, hier jedoch die losen Fasern bzw. Faserstränge an der Hüllfolieninnenseite anhaften und fixiert werden, damit diese in Nachfolgeprozessen nicht aus dem Granulat herausfallen.

Es ist vorteilhaft, wenn bevorzugt der Faserstrang bei der erfindungsgemäßen Lösung während des Umhüllvorgangs bereits im Verfestigungsbereich durch Konstruktion und Verjüngung der Strangführung mechanisch zusammengepresst/kompaktiert wird.

Bei dem erfindungsgemäßen Verfahren liegt die Folie nur lose um den Faserstrang; sie ist nicht schrumpfend aufgepresst. Es ist vorteilhaft, das keine Energie zum Aufheizen und zum Kühlen benötigt wird sowie keine schrumpfenden Folien.

Das Verwendungspotential der erfindungsgemäßen weichen Schüttkörper ist aufgrund des angewandten Verfahrens und der stofflich unbeschränkten Hüllfolie nicht auf faserverstärkte Kunststoffe beschränkt. Anwendungspotentiale der Hüllgranulate sind deshalb auch beispielsweise: Stoßabsorberschüttungen (z.B. im Verpackungsbereich), der Einsatz zum Aufsaugen von flüssigen Medien, da die Stirnflächen/Schnittflächen offen sind (z.B. zur Havariebekämpfung, oder Nutzung als Flüssigkeitsdepot), als Dosierhilfe zur Bereitstellung von Verstärkungsfasern für die Compoundierung (faserverstärkte Kunststoffe), als Filtermedium für zu reinigende Gase (z.B. als Schüttung in Behältern, die mit kontaminierten Gasen durchflutet werden) oder als Anzuchthilfe für Mikroorganismen, wobei die hohe innere Oberfläche genutzt wird.

Erfindungsgemäß können die eingesetzten Fasermaterialien Chemiefasern oder Naturfasern oder andere Faserstoffe auf organischer oder anorganischer Basis sein.

Gemäß einer bevorzugten Weiterbildung der erfindungsgemäßen Aufgabenlösung ist der überlappende Bereich der Umhüllung als die den Zusammenhalt sicherstellende Haftfläche kleiner als die gesamte Mantelfläche, vorzugsweise liegt dieser im Bereich von 10 bis 30%.

Weiterhin ist es bevorzugt so, dass die Umhüllung einen endlosen faserhaltigen Strang mit einem Durchmesser von maximal 30 mm, vorzugsweise 6 bis 15 mm einhüllt und dass die Umhüllung einen Masseanteil an den Schüttkörpern von 30%, vorzugsweise 15% nicht überschreitet.

Gemäß einer ersten alternativen bevorzugten Variante des erfindungsgemäßen Verfahrens erfolgt der Schnitt des endlos umhüllten Faserstrangs mit Schnittlängen von 5 bis 50 mm, vorzugsweise 7 bis 25 mm im rechten Winkel zur Mantelfläche des gebildeten Endlosstrangs.

Gemäß einer anderen bevorzugten Variante des erfindungsgemäßen Verfahrens erfolgt der Schnitt des endlos umhüllten Faserstrangs mit Schnittlängen von 5 bis 50 mm, vorzugsweise 7 bis 25 mm in einem von 90° verschiedenen Winkel zur Mantelfläche des gebildeten Endlosstrangs.

Es können, müssen aber nicht, mindestens Anteile der Fasern aus Recyclingprozessen oder aus Abfallaufbereitungsverfahren resultieren.

Gemäß einer Weiterbildung des Verfahrens ist es beispielsweise möglich, dass die abgelängten Schüttkörper einer thermischen Zusatzbehandlung unterzogen werden.

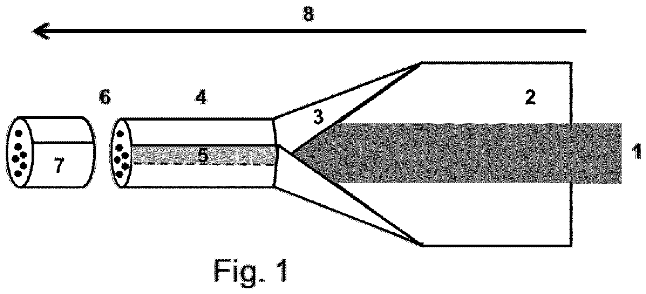

Die Erfindung soll nachstehend beispielhaft und anhand einer vereinfachten Schnittdarstellung in Fig. 1 näher erläutert werden.
Erfindungsgemäß ist vorgesehen, dass man einen verstärkungsfaserhaltigen endlosen Strang 1 formt. Dieses kann durch ein Zusammenführen von endlosen Filamentgarnen / Rovings, endlosen Stapelfaserbändern oder durch eine endlose Schüttung von kurzfaserigen Partikeln geschehen. Als Faserstoffe eignen sich Chemiefasern, Naturfasern oder andere Faserstoffe auf organischer oder anorganischer Basis oder deren Mischung. In diesem endlosen Strang können neben den späteren als mechanische Verstärkung dienenden Fasern auch Fasermischungen unterschiedlicher Verstärkungsfasern als auch Zusätze von anderen Funktionskomponenten wie beispielsweise Binder, Flammschutzmittel, Tribokomponenten und Prozesshilfsstoffe enthalten sein.

Diesem endlosen Verstärkungsfaserstrang wird längs von unten, seitlich oder von oben mit der gleichen Zulaufgeschwindigkeit ein endloser, dünner, flexibler Hüllmaterialstreifen 2 zugeführt. Dieser Hüllmaterialstreifen ist breiter als der Umfang des späteren zylinderähnlichen Schüttkörpers, damit eine haftende Überlappung im Mantelbereich gewährleistet wird. Zu Beginn des Prozessschrittes der Umhüllung liegt der Hüllmaterialstreifen vorzugsweise mit einer Breite von 20 bis 50 mm vor. Die Breite des eingesetzten Hüllmaterialstreifens bestimmt in Abhängigkeit zur Breite des gewählten Überlappungsbereiches 5 den Durchmesser der aus dem Prozess resultierenden faserhaltigen Schüttkörper. Der Überlappungsbereich 5 liegt in einem Bereich von 5 bis 40% der Hüllmaterialmantelfläche. Er sollte aus wirtschaftlichen Gründen so gewählt werden, dass bei minimaler Überlappungsfläche noch ein ausreichender mechanischer Zusammenhalt der faserhaltigen Schüttkörper sichergestellt wird. Der Hüllstreifen muss biegeflexibel sein und kann in Rollenform beispielsweise als Folie, Gewebe, Spinnvlies, Nassvlies oder Papier ausgebildet sein. Dabei kann die Streifenbreite bereits die technologisch notwendige Breite aufweisen oder es wird die technologisch notwendige Streifenbreite unmittelbar an der Maschine zugeschnitten. Aufgrund der Flexibilität des Hüllmaterials können Grund- und Deckfläche der zylinderähnlichen Schüttkörper, von kreisrund über elliptisch bis zu unregelmäßig variieren. Das Masseverhältnis von Hüllstreifen und zulaufendem Verstärkungsfaserstrang entscheidet über dessen Anteil im Endprodukt. Nach dem Zusammenführen von Verstärkungsfaserstrang mit dem Hüllstreifen wird das biegeflexible Hüllmaterial des Hüllstreifens längs mechanisch um den Faserstrang drapiert (3), so dass sich das Hüllmaterial längs in einem Umfangsbereich 5 überlappt. Die Verfestigung des endlosen Hüllkörperstrangs erfolgt bevorzugt im Bereich 4 durch ein Verkleben im überlappenden Flächenbereich 5. Dies erfolgt so, dass beispielsweise mit einer Anpressschiene ein äußerer mechanischer Druck im Bereich der Überlappungsfläche 5 aufgebracht wird, der dafür sorgt, dass selbstklebendes Hüllmaterial oder mit dem Hüllprozesses im Bereich 5 aufgebrachter, im Folgeprozess nicht störender Zusatzbinder eine Klebeverbindung erzeugt. Zur Prozessverbesserung kann die drückende Kontaktschiene beheizbar sein.
Wahlweise kann der Endlosstrang vor dem Schneidprozess nochmals durch eine formgebende Düse laufen, die den Strang mechanisch kompaktiert und/oder insbesondere bei Einsatz kurzfaseriger Komponenten dem Faserstrang beigemischte Binderanteile thermisch verfestigt.

Am Ende des Verfahrens 8 wird der endlose Hüllkörperstrang definiert mittels Schneidtechnik im Bereich 6 zu rieselfähigen und dosierbaren faserhaltigen Schüttkörpern 7 abgelängt. Die Schnittlängen können variabel gewählt werden und bewegen sich bevorzugt im Bereich von 8 bis 25 mm. Erfindungsgemäß können so faserhaltige Schüttkörper mit sehr hohen Verstärkungsfasergehalten > 90% energieeffizient für eine breite Anwendung hergestellt werden.

Wahlweise können die abgelängten Schüttkörper einer thermischen Zusatzbehandlung ausgesetzt werden, um im Schüttkörper vorhandene Bindekomponenten zu verfestigen, Wirksubstanzen zu aktivieren und geometrische Formen zu fixieren.

Das erfindungsgemäße Verfahren ermöglicht es, Verstärkungsfasern von der Endlosform bis zu den kurzfaserigen Stäuben < 5 mm zu verarbeiten. Neben Primärfaserstoffen ist es somit auch möglich, unterschiedliche endliche Verstärkungsfasern aus den verschiedenen Recyclingprozessen zu verarbeiten. Diese stellen ein kostengünstigeres Ausgangmaterial dar und können so einer sinnvollen und hochwertigen Verwendung zugeführt werden. Als Verstärkungsfasermaterialien eignen sich alle bekannten Faserstoffpolymere wie Glas, Aramid und Carbon, genauso wie endliche Naturfasern z.B. Flachs, Hanf, Sisal u.ä. Diese können sortenrein als auch in Mischungen mit anderen Verstärkungs- und Funktionsfasern eingesetzt werden. Der Faserstrang kann neben den Verstärkungsfasern weitere Zusatz- und Hilfskomponenten in fester oder flüssiger Form enthalten.

Je nach Erfordernis können die Hüllmaterialien frei gewählt werden. Hauptkriterium ihrer Einsetzbarkeit ist die endlose Bandform bei einer bevorzugten Streifenbreite von 20 bis 50 mm und eine ausreichende Flexibilität, um sie mechanisch um den Verstärkungsfaserstrang legen zu können. Für hohe Verstärkungsfaseranteile über 90% sollte die Flächenmasse des Hüllmaterials 100 g/m² nicht überschreiten. So können als Hüllmaterialien alle dünnschichtigen, biegeflexiblen Werkstoffe wie textile Gewebe, textile Gitter, dünne Vliesstoffe, Papiere und Folien u. dgl. eingesetzt werden. Eine weitere Voraussetzung für den Einsatz als Hüllmaterial ist, dass die innere Oberfläche selbstklebend ist.
Beispielsweise bei Einsatz einer glatten Hüllfolie resultieren Schüttkörper mit sehr glatter Manteloberfläche, die selbst bei Schüttkörperlängen > 15 mm extrem rieselfähig und sehr gut dosierbar sind.

Die Einsatzbereiche derartiger umhüllter, faserhaltiger Schüttkörper sind vorzugsweise die Compoundierung zur Herstellung von verspritzbaren, verstärkungsfaserhaltigen Granulaten für thermoplastisch gebundene Faserverbundwerkstoffe. Weitere Anwendungsfelder sind beispielsweise die Elastomer- oder Gummiverstärkung oder der Einsatz als gering verfestigte Verstärkungsfaserhalbzeuge in Duromermatrices, die beispielsweise durch Rührprozesse leicht in die einzelnen Fasern wieder aufgelöst werden können und so die einzelnen Verstärkungsfasern freigeben, so dass diese sich dann gut in der Duromermatrix verteilen. Es ist auch möglich, die abgelängten Schüttkörper noch weiteren Behandlungen zu unterziehen, beispielsweise einer thermischen Zusatzbehandlung.

Nachfolgend wird anhand von konkreten Ausführungsbeispielen die vorliegende Erfindung näher erläutert. Es versteht sich, dass diese Ausführungsbeispiele nur exemplarischen Charakter haben und die Erfindung in keiner Weise auf die darin genannten konkreten Maßnahmen und Parameter beschränkt ist.

### Ausführungsbeispiel 1

### Verarbeitung eines CF-Multifilamentgarnstranges zu rieselfähigen Schüttkörpern für die Compoundierung

Als Ausgangsmaterialien wurde ein Multifilamentcarbonfaserstrang der Feinheit von 14,432 g/m sowie eine selbstklebende LDPE-Hüllfolie mit einer Breite von 3 cm, einer Dicke von 0,05 mm, einer Reißkraft von 28N/25mm mit einer Polyacrylatklebstoffschicht bei einer Klebkraft von 2,0N/25mm eingesetzt. Der LDPE-Hüllfoliestreifen wurde längs mit innen liegender Klebschicht um das Carbonfaserfilamentgarn wie in Fig. 1 dargestellt drapiert, wobei eine Überlappung von 8 mm eingestellt wurde. Dieser Überlappungsbereich wurde zusätzlich mittels Kontakthitze über eine Heizschiene thermisch verklebt. Der endlos abgezogene umhüllte Strang wurde abschließend mit einer Fallmesserschneidvorrichtung in 2 cm lange Schüttkörper abgelängt und in einem Vorratsbehälter gesammelt. Der CF-Faseranteil in den Schüttkörpern betrug = 91,76% bei einem Folieanteil mit Kleber von 8,24 %. In einem nachgeschalteten Compoundierversuch konnten diese Schüttkörper problemlos verarbeitet werden, wobei mit einem CF-Endgehalt von 10% in einer PA6-Matrix ein für den Spritzgusssektor verarbeitbares Granulat resultierte.

### Bezugszeichenliste Fig. 1

1 ... endloser Strang aus Verstärkungsfasern
2 ... Hüllmaterialstreifen
3 ... Bereich des Drapierens des Hüllmaterials um den Faserstrang
4 ... Verfestigungsbereich
5 ... Überlappungsbereich des Hüllmaterialstreifens
6 ... Schneidbereich
7 ... faserhaltiger Schüttkörper
8 ... Fertigungslinie

## Patentansprüche

1. Verfahren zur Herstellung von weichen, zylinderähnlichen, mit einem flexiblen Material umhüllten, faserhaltigen Schüttkörpern ***zur Herstellung faserhaltiger Kunststoffgranulate für thermoplastisch gebundene Faserverbundwerkstoffe,*** bei dem man Fasern, Faserbündel, Faserstaub oder eine Mischung aus mindestens zwei dieser Komponenten zu einem endlosen Strang formt, diesen kontinuierlich mit einem parallel dazu geführten, endlos zulaufenden flexiblen Hüllmaterialstreifen, welcher breiter ist als der Umfang des späteren Schüttkörpers, durch Längsumschlagen den losen Faserstrang vollständig umhüllt und durch Haften eines gebildeten Überlappungsbereiches dauerhaft umschließt, welcher als endloser Hüllstrang in einem abschließenden Arbeitsschritt durch Querschneiden in Schüttkörper überführt wird,
**dadurch gekennzeichnet, dass** man einen selbstklebenden Hüllmaterialstreifen (2) verwendet und man den Zusammenhalt des endlos umhüllten Faserstrangs (1) durch Selbsthaften des Hüllmaterialstreifens im Überlappungsbereich(5)herbeiführt.

2. Verfahren nach Anspruch 1, **dadurch gekennzeichnet, dass** die eingesetzten Fasermaterialien Chemiefasern oder Naturfasern oder andere Faserstoffe auf organischer oder anorganischer Basis sind.

3. Verfahren nach Anspruch 1 oder 2, **dadurch gekennzeichnet, dass** der überlappende Bereich (5) der Umhüllung als die den Zusammenhalt sicherstellende Haftfläche kleiner ist als die gesamte Mantelfläche, vorzugsweise im Bereich von 10 bis 30% liegt.

4. Verfahren nach einem der Ansprüche 1 bis 3, **dadurch gekennzeichnet, dass** die Umhüllung einen endlosen faserhaltigen Strang (1) mit einem Durchmesser von maximal 30 mm, vorzugsweise 6 bis 15 mm einhüllt.

5. Verfahren nach einem der Ansprüche 1 bis 4, **dadurch gekennzeichnet, dass** die Umhüllung einen Masseanteil an den Schüttkörpern von 30%, vorzugsweise 15% nicht überschreitet.

6. Verfahren nach einem der Ansprüche 1 bis 5, **dadurch gekennzeichnet, dass** der Schnitt des endlos umhüllten Faserstrangs (1) mit Schnittlängen von 5 bis 50 mm, vorzugsweise 7 bis 25 mm im rechten Winkel zur Mantelfläche des gebildeten Endlosstrangs erfolgt.

7. Verfahren nach einem der Ansprüche 1 bis 5, **dadurch gekennzeichnet, dass** der Schnitt des endlos umhüllten Faserstrangs (1) mit Schnittlängen von 5 bis 50 mm, vorzugsweise 7 bis 25 mm in einem von 90° verschiedenen Winkel zur Mantelfläche des gebildeten Endlosstrangs erfolgt.

8. Verfahren nach einem der Ansprüche 1 bis 7, **dadurch gekennzeichnet, dass** mindestens Anteile der Fasern aus Recyclingprozessen oder aus Abfallaufbereitungsverfahren resultieren.

## Claims

1. A method for producing soft, cylinder-like fibrous bulk bodies wrapped by a flexible material for production of fibrous plastic granulates for thermoplastically bonded fibre composite materials, in which method fibres, fibre bundles, fibre dust or a mixture of at least two of these components are shaped to form an endless strand, which is fully wrapped continuously with a flexible wrapping material strip, which is guided parallel to the endless strand, is fed in an endless manner, and is wider than the periphery of the subsequent bulk body, by wrapping the wrapping material strip longitudinally around the loose fibre strand, and is permanently enwrapped by adhesion of a formed overlap region, this product in the form of an endless wrapped strand being converted in a subsequent process step into a bulk body by cross-cutting,
**characterised in that** a self-adhesive wrapping material strip (2) is used and the endless enwrapped fibre strand (1) is held together by the self-adhesion of the wrapping material strip in the overlap region (5).

2. The method according to claim 1, **characterised in that** the used fibre materials are chemical fibres or natural fibres or other fibre materials on an organic or inorganic basis.

3. The method according to claim 1 or 2, **characterised in that** the overlapping region (5) of the wrapping as the adhesive area ensuring that the enwrapped fibre strand is held together is smaller than the total lateral surface, and preferably ranges from 10 to 30%.

4. The method according to any one of claims 1 to 3, **characterised in that** the wrapping enwraps an endless fibrous strand (1) with a diameter of at most 30 mm, preferably 6 to 15 mm.

5. The method according to any one of claims 1 to 4, **characterised in that** the wrapping does not exceed a mass fraction in the bulk bodies of 30%, preferably 15%.

6. The method according to any one of claims 1 to 5, **characterised in that** the endless enwrapped fibre strand (1) is cut with cut lengths of from 5 to 50 mm, preferably 7 to 25 mm, at right angles to the lateral surface of the formed endless strand.

7. The method according to any one of claims 1 to 5, **characterised in that** the endless enwrapped fibre strand (1) is cut with cut lengths of from 5 to 50 mm, preferably 7 to 25 mm, at an angle different from 90° to the lateral surface of the formed endless strand.

8. The method according to any one of claims 1 to 7, **characterised in that** at least portions of the fibres are produced from recycling processes or from waste treatment methods.

## Revendications

1. Procédé destiné à fabriquer des produits en vrac mous, analogues à des cylindres, enrobés d'une matière souple, contenant des fibres, pour la production de granulés de matière plastique fibreux pour des composites en fibre à liaison thermoplastique, lors duquel on façonne des fibres, des faisceaux de fibres, des poussières de fibres ou un mélange d'au moins deux de ces composants en un écheveau continu, on enrobe celui-ci en continu avec un ruban de matière d'enrobage souple, guidé à la parallèle de celui-ci, alimenté sans fin, lequel est plus large que la périphérie du produit en vrac ultérieur, par rabattage longitudinal, on enrobe complètement l'écheveau de fibres libre et on l'entoure durablement par fixation d'une zone de chevauchement périphérique formée, laquelle sous la forme d'un écheveau d'enrobage sans fin est transformée par coupe transversale, dans une étape de travail terminale en produits en vrac,
**caractérisé en ce qu'**on utilise un ruban de matière d'enrobage autocollant (2) et on provoque la cohésion de l'écheveau de fibre (1) enrobé sans fin par auto-adhésion du ruban de matière d'enrobage dans la zone de chevauchement (5).

2. Procédé selon la revendication 1, **caractérisé en ce que** les matières fibreuses mises en oeuvre sont des fibres chimiques ou des fibres naturelles ou d'autres substances fibreuses sur base organique ou anorganique.

3. Procédé selon la revendication 1 ou 2, **caractérisé en ce que** la zone de chevauchement (5) de l'enrobage, en tant que surface d'adhésion assurant la cohérence est inférieure à l'ensemble de la surface d'enveloppe, de préférence se situe dans l'ordre de 10 à 30%.

4. Procédé selon l'une quelconque des revendications 1 à 3, **caractérisé en ce que** l'enrobage enrobe un écheveau fibreux (1) sans fin avec un diamètre d'un maximum de 30 mm, de préférence de 6 à 15 mm.

5. Procédé selon l'une quelconque des revendications 1 à 4, **caractérisé en ce que** l'enrobage ne dépasse pas une part en masse du produit en vrac de 30%, de préférence de 15%.

6. Procédé selon l'une quelconque des revendications 1 à 5, **caractérisé en ce que** la coupe de l'écheveau de fibres (1) enrobé sans fin s'effectue à des longueurs de coupe de 5 à 50 mm, de préférence de 7 à 25 mm en angle droit par rapport à la surface d'enveloppe de l'écheveau sans fin formé.

7. Procédé selon l'une quelconque des revendications 1 à 5, **caractérisé en ce que** la coupe de l'écheveau de fibres (1) enrobé sans fin s'effectue à des longueurs de coupe de 5 à 50 mm, de préférence de 7 à 25 mm sous un angle différent de 90° par rapport à la surface d'enveloppe de l'écheveau sans fin formé.

8. Procédé selon l'une quelconque des revendications 1 à 7, **caractérisé en ce qu'**au moins des parts des fibres résultent d'opérations de recyclage ou de procédés de traitement des déchets.
